# EUROPÄISCHE PATENTSCHRIFT

(11) **EP 2 440 431 B1**
(45) Veröffentlichungstag und Bekanntmachung des Hinweises auf die Patenterteilung: **25.09.2013**
(21) Anmeldenummer: 10724077.2
(22) Anmeldetag: 08.06.2010
(51) Int. Cl.: B60P 1/64, B66F 9/06

(54) **FLURGEBUNDENES SCHWERLAST-TRANSPORTFAHRZEUG, INSBESONDERE FAHRERLOSES SCHWERLAST-TRANSPORTFAHRZEUG FÜR ISO-CONTAINER**
HEAVY-DUTY GROUND TRANSPORTATION VEHICLE, IN PARTICULAR AN UNMANNED HEAVY-DUTY TRANSPORTATION VEHICLE FOR ISO CONTAINERS
VÉHICULE DE TRANSPORT DE CHARGES LOURDES DE TYPE VÉHICULE DE MANUTENTION, EN PARTICULIER VÉHICULE DE TRANSPORT DE CHARGES LOURDES SANS CHAUFFEUR DESTINÉ À DES CONTENEURS ISO

(30) Priorität: 10.06.2009 DE 102009025051
(43) Veröffentlichungstag der Anmeldung: 18.04.2012
(73) Patentinhaber: Gottwald Port Technology GmbH, 40597 Düsseldorf (DE)
(72) Erfinder: FRANZEN, Hermann, 41238 Mönchengladbach (DE); WIESCHEMANN, Armin, 46119 Oberhausen (DE); HEGEWALD, Mike, 46117 Oberhausen (DE); MOUTSOKAPAS, Jannis, 40789 Monheim (DE)
(74) Vertreter: Moser & Götze
(86) Internationale Anmeldenummer: PCT/EP2010/058020
(87) Internationale Veröffentlichungsnummer: WO 2010/142687

(56) Entgegenhaltungen:
- EP-A1- 2 017 218
- WO-A1-2008/046728
- WO-A1-2009/053524
- DE-A1- 4 112 138
- DE-A1-102005 053 305
- DE-A1-102007 025 332
- US-A- 4 496 274

## Beschreibung

Die Erfindung betrifft ein flurgebundenes Schwerlast-Transportfahrzeug für ISO-Container, insbesondere fahrerloses Schwerlast-Transportfahrzeug, mit einem Fahrantrieb, wobei in dem Schwerlast-Transportfahrzeug eine Batterie für eine Energiebereitstellung für den Fahrantrieb angeordnet ist.

Aus dem Patent DE 42 03 778 C2 ist ein fahrerloses Flurfahrzeug mit einem darauf angeordneten Manipulator bekannt. Mittels des Flurfahrzeuges kann der Manipulator selbsttätig zwischen verschiedenen Arbeitsstationen verfahren werden, um dort Montageaufgaben auszuführen. Das Flurfahrzeug wird über eine auswechselbare Nickel-Cadmium-Batterie angetrieben. Die Batterie kann selbsttätig an einer Wechselstation ausgetauscht werden, wenn sie aufgeladen werden muss. Hierfür ist in einem Fahrzeugrahmen des Flurfahrzeugs ein Batterieraum vorgesehen, in dem quer zur Längsrichtung des Flurfahrzeugs ausgerichtete Führungsschienen angeordnet sind. Die Batterie ist an ihrer Unterseite mit Rollen versehen, die auf den Führungsschienen abrollen. Um die Batterie während des Betriebs des Flurfahrzeuges gegen Bewegungen entlang der Führungsschienen zu sichern, ist an dem Fahrzeugrahmen ein in Richtung der Batterie federnd vorgespannter Stift vorgesehen, der während des Betriebs des Flurfahrzeuges in eine Aussparung in der Batterie eingreift. Für einen Wechsel der Batterie kann der Stift hydraulisch abgesenkt werden. Die somit frei gegebene Batterie kann über eine Wechselvorrichtung entlang der Führungsschienen seitlich aus dem Fahrzeugrahmen heraus gezogen werden. Für den Wechselvorgang fährt das Flurfahrzeug selbsttätig an eine Wechselstation.

Des Weiteren ist aus der deutschen Patentanmeldung DE 10 2007 039 778 A1 bereits ein fahrerloses und flurgebundenes Schwerlast-Transportfahrzeug für ISO-Container bekannt. Das Transportfahrzeug weist einen Fahrzeugrahmen auf, auf dem mindestens eine Hubplattform angeordnet ist, die aus einer abgesenkten Transportstellung über mindestens einen Hubantrieb in eine angehobene Übergabestellung anhebbar beziehungsweise umgekehrt absenkbar ist. Üblicherweise werden derartige Transportfahrzeuge über einen Dieselmotor angetrieben.

Die Patentschrift US 4 496 274 A offenbart ein fahrerloses, flurgebundenes Transportfahrzeug, das auf vier jeweils um eine vertikale Achse schwenkbaren Antriebsrollen verfahrbar ist und über zwei zusätzliche Antriebsräder angetrieben ist. Die Antriebsräder werden unabhängig über jeweils einen Elektromotor angetrieben. Der unabhängige Antrieb der Antriebsräder bildet eine sogenannte Panzerlenkung, über die das Transportfahrzeug lenkbar ist und die bei einer Verwendung zusammen mit kettenlosen Antriebsrädern üblicherweise auf einen Einsatz bei geringeren Lasten beschränkt ist. Die Elektromotoren werden von einer Batterie mit elektrischer Energie gespeist. Die Batterie kann über ein Batteriefahrzeug ausgetauscht werden. Zur sicheren Aufnahme von Transportgegenständen umfasst das Transportfahrzeug außerdem eine Ladeplattform, die zwei Tragschienen aufweist.

In der internationalen Patentanmeldung WO 2009/05324 A1 ist ein Transportfahrzeug beschrieben, das zum Transport von Containern eingesetzt und fahrerlos betrieben wird. Das Transportfahrzeug kann im unbeladenen Zustand über einen elektrischen Antrieb verfahren werden, der von einer Batterie gespeist wird. Für die in das Transportfahrzeug integrierte Batterie ist eine stationäre Ladevorrichtung am Umschlagort der Container vorgesehen, die zum Laden der Batterie angefahren wird.

Die europäische Patentanmeldung EP 2 017 218 A1 offenbart Flurförderfahrzeuge zum paarweisen Transport von Containern, die jeweils zwei in einer Hauptfahrrichtung zeigende Tragarme mit Laufrollen umfassen. Zwei Flurförderfahrzeuge werden jeweils in entgegengesetzter Längsrichtung eines Containers an diesen herangefahren, um jeweils ein Ende des Containers zwischen den Tragarmen aufzunehmen. Die Flurförderfahrzeuge sind elektrisch angetrieben.

Ausgehend von diesem Stand der Technik liegt der vorliegenden Erfindung die Aufgabe zugrunde, ein flurgebundenes Schwerlast-Transportfahrzeug für ISO-Container, insbesondere ein fahrerloses Schwerlast-Transportfahrzeug, zu schaffen, das umweltfreundlicher ist.

Diese Aufgabe wird durch ein flurgebundenes Schwerlast-Transportfahrzeug für ISO-Container, insbesondere ein fahrerloses Schwerlast-Transportfahrzeug, mit den Merkmalen des Anspruchs 1 gelöst. Vorteilhafte Ausgestaltungen der Erfindung sind in den Unteransprüchen 2 bis 6 angegeben.

Erfindungsgemäß wird bei einem flurgebundenen Schwerlast-Transportfahrzeug für ISO-Container, insbesondere einem fahrerlosen Schwerlast-Transportfahrzeug, mit einem Fahrantrieb, wobei in dem Schwerlast-Transportfahrzeug eine Batterie für die Energiebereitstellung für den Fahrantrieb angeordnet ist, eine verbesserte Umweltfreundlichkeit dadurch erreicht, dass die Batterie für einen Wechsel für ein Aufladen der Batterie außerhalb des Schwerlast-Transportfahrzeuges lösbar mit dem Schwerlast-Transportfahrzeug verbunden ist und in das Schwerlast-Transportfahrzeug quer zur Längsrichtung des Schwerlast-Transportfahrzeuges hinein und aus diesem heraus bewegbar ist, die Batterie als Bleibatterie ausgebildet ist und ein Gewicht zwischen 6 t und 10 t aufweist, das Schwerlast-Transportfahrzeug mindestens ein zulässiges Gesamtgewicht von 40 t aufweist und in Längsrichtung des Schwerlast-Transportfahrzeuges gesehen vorne und hinten am Rand des Einbauraums Tragschienen angeordnet sind, die quer zur Längsrichtung des Schwerlast-Transportfahrzeuges verlaufen und auf denen sich die Batterie abstützt. Ein wesentlicher Vorteil des mittels einer Batterie im Sinne einer Traktionsbatterie betriebenen Schwerlast-Transportfahrzeugs ist die Tatsache, dass lokale Schadstoffemissionen vollständig vermieden und Schallemissionen deutlich reduziert werden können. Dadurch wird die unmittelbare Umwelt deutlich weniger belastet. Weiterhin kann der Wirkungsgrad des Antriebsstranges deutlich erhöht werden. Hierdurch kann der gesamte Energiebedarf, der zum Betrieb des Fahrzeugs notwendig ist, reduziert werden. Dadurch wird einerseits die Umweltverträglichkeit weiter verbessert, andererseits können Betriebskosten eingespart werden. Die Batterie ist wartungsarmer als eine Diesel-Generatoreinheit, die auch bisher zur Bereitstellung der elektrischen Fahrenergie eingesetzt wurde. Hierdurch wird eine Reduktion der Wartungskosten möglich. Da der Strom zum Aufladen der Batterien aus unterschiedlichen Energiequellen erzeugt werden kann, ist der Betrieb des Fahrzeugs unabhängig von der Verfügbarkeit und den Kosten von Diesel-Kraftstoff. Außerdem werden die Zuverlässigkeit und die Verfügbarkeit des Schwerlast-Transportfahrzeuges erhöht, da es zu einer Verwendung von Bleibatterien in Fahrzeugen langjährige Erfahrungen gibt. Auch kann der Ladevorgang der Batterie außerhalb des Schwerlast-Transportfahrzeuges erfolgen und das Schwerlast-Transportfahrzeug mit einer geladenen Wechsel-Batterie den Betrieb weiter führen.

Im Sinne der Erfindung wird unter einem Schwerlast-Transportfahrzeug ein Fahrzeug verstanden, das eine Zuladung von mindestens 40 t transportieren kann. Als Lasten für die Schwerlast-Transportfahrzeuge kommen ISO-Container und Wechselbehälter in Frage. Beladene Wechselbehälter können in der Regel bis zu etwa 16 t wiegen. ISO-Container wiegen im beladenen Zustand 20 t bis 80 t. Der Transport von ISO-Containern wird bevorzugt. Unter ISO-Containern werden allgemein genormte Großbehälter mit genormten Aufnahmepunkten oder- ecken für Lastaufnahmemittel verstanden. Auch ein Schwerlast-Transportfahrzeug, das leer fährt oder einen leeren ISO-Container oder Wechselbehälter transportiert, soll unter diese Verständnis fallen, soweit dieses Fahrzeug eine Zuladung von mindestens 15 t, vorzugsweise mindestens 20 t, transportieren kann. Es kann auch vorkommen, dass derartige Schwerlast-Transportfahrzeuge in einem Mischbetrieb arbeiten, d.h. neben den ISO-Container oder Wechselbehältern auch andere Lasten wie Sattelauflieger, Wechselbrücken, Anhänger, Lastkraftwagen oder Zugmaschinen transportieren.

Bevorzugt ist vorgesehen, dass das Schwerlast-Transportfahrzeug mehrere vordere Räder und hintere Räder aufweist, die vorderen Räder von einem ersten Elektromotor und die hinteren Räder von einem zweiten Elektromotor antreibbar sind. Hierbei ist die Batterie zwischen den vorderen und hinteren Rädern angeordnet.

Um den Batteriewechsel weiter zu erleichtern, ist vorgesehen, dass das Schwerlast-Transportfahrzeug einen Fahrzeugrahmen aufweist, der einem nach unten und zu den Seiten des Schwerlast-Transportfahrzeuges offenen Einbauraum für die Batterie aufweist.

Eine besonders einfache Befestigung der Batterie im Schwerlast-Transportfahrzeug wird dadurch erreicht, dass die Batterie im Wesentlichen quaderförmig ist, an in Längsrichtung des Schwerlast-Transportfahrzeuges gesehen vorderen und hinteren Seitenwänden der Batterie Auflageelemente angeordnet sind, die jeweils aus der vorderen und hinteren Seitenwand heraus ragen und über die Auflageelemente die Batterie auf den Tragschienen aufliegt.

Das Schwerlast-Transportfahrzeug kann in Bezug auf den Batteriewechsel vorteilhafter Weise passiv ausgebildet werden, da im Bereich der Auflageelemente und der Tragschienen Zentrierungselemente angeordnet sind, die bei einem Hereinbewegen der Batterie in den Einbauraum und einem Absenken der Batterie auf die Tragschienen die Auflageelemente zu den Tragschienen ausrichten. Auch ist vorgesehen, dass an der Batterie elektrische Kontaktelemente angeordnet sind und im Bereich der Tragschienen elektrische Gegen-Kontaktelemente angeordnet sind, die automatisch über ein Absenken der Batterie auf die Tragschienen verbindbar sind.

Nachfolgend wird die Erfindung anhand eines in einer Zeichnung dargestellten Ausführungsbeispiels näher erläutert. Es zeigen:
Figur 1 eine perspektivische Ansicht von oben auf ein flurgebundenes und fahrerloses Schwerlast-Transportfahrzeug für ISO-Container,
Figur 2 eine perspektivische Ansicht von unten auf das Schwerlast-Transportfahrzeug gemäß Figur 1 und
Figur 3 eine Seitenansicht des Schwerlast-Transportfahrzeuge von Figur 1.

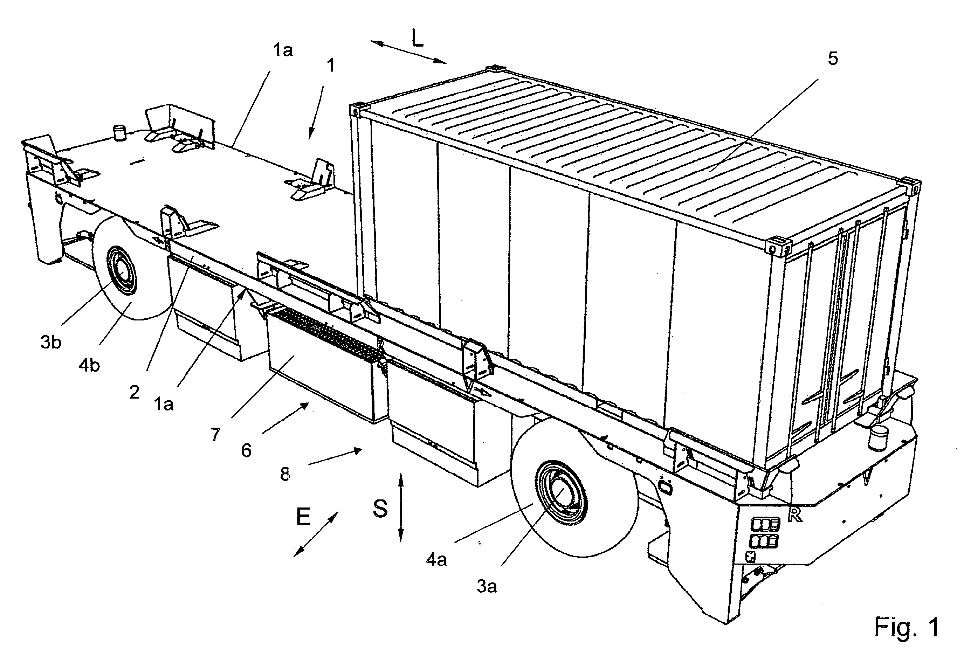

Die Figur 1 zeigt eine perspektivische Ansicht von oben auf ein flurgebundenes und fahrerloses Schwerlast-Transportfahrzeug 1 für ISO-Container 5. Das Schwerlast-Transportfahrzeug 1 hat etwa ein Leergewicht von 35 Tonnen. Hierzu kommt noch das Gewicht des zu transportierenden ISO-Containers 5, so dass im Beladungszustand ein Gesamtgewicht von etwa 85 Tonnen erreicht wird. Das als Vierradfahrzeug ausgebildete Transportfahrzeug 1 besteht im Wesentlichen aus einem Fahrzeugrahmen 2, an dem auf einer gemeinsamen Vorderachse 3a zwei vordere Räder 4a und auf einer gemeinsamen Hinterachse 3b zwei hintere Räder 4b gelagert sind. Die vier Rädern 4a, 4b sind mit einer Bereifung versehen. Von dem Fahrzeugrahmen 2 wird eine ebene Plattform 5 getragen, die zur Aufnahme der zu transportierenden ISO-Container 5 dient.

Es ist ersichtlich, dass der Fahrzeugrahmen 2 einen Einbauraum 6 für eine Batterie 7 aufweist. Der Einbauraum 6 beginnt unterhalb der Plattform 5 des Fahrzeugrahmens 2 und ist nach unten in Richtung des Bodens 8 und zu den Seiten 1 a des Schwerlast-Transportfahrzeuges 1 offen. Außerdem ist der Einbauraum 6 zwischen den vorderen und den hinteren Rädern 4a, 4b des Schwerlast-Transportfahrzeuges 1 angeordnet. Da der Einbauraum 6 in Längsrichtung L des Schwerlast-Transportfahrzeuges 1 gesehen zu der rechten und linke Seite 1 a hin offen ist, kann ein Wechsel der Batterie 7, um die Batterie 7 außerhalb des Schwerlast-Transportfahrzeuges 1 aufzuladen, einfach durch eine Bewegung quer zur Längsrichtung L des Schwerlast-Transportfahrzeuges 1 in einer Be- und Entladerichtung E erfolgen. Außerdem ist der Einbauraum 6 nach unten offen, so dass die Batterie 7 von gabelstaplerartigen Fördergeräten be- und entladen werden kann. Die Batterie 7 ist als Bleibatterie ausgebildet und hat etwa ein Gewicht von 8 bis 9 Tonnen. Mit dieser Batterie 7 ist ein Betrieb des Schwerlast-Transportfahrzeuges 1 für etwa 6 bis 8 Stunden möglich.

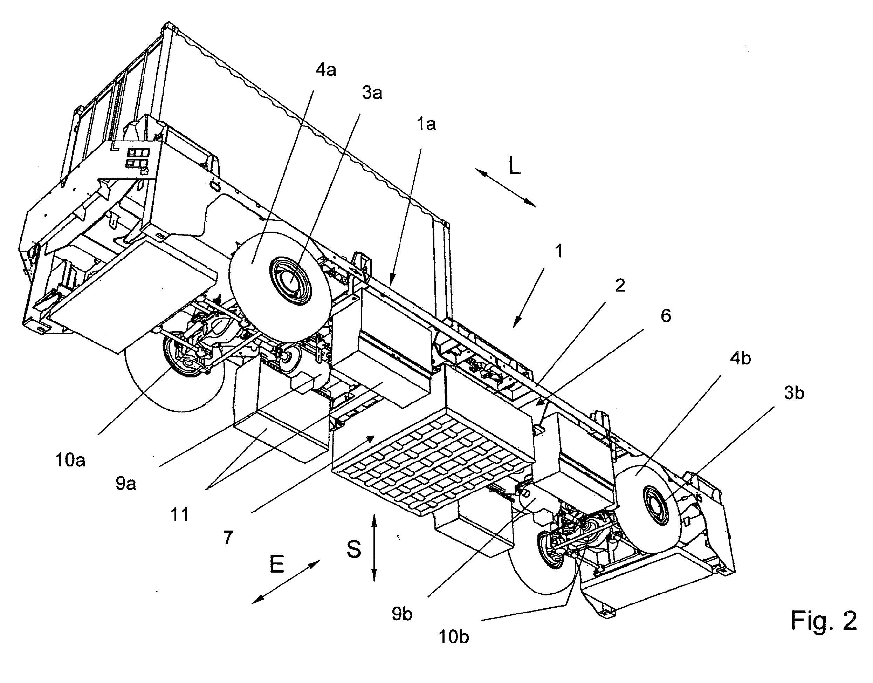

In der Figur 2 ist eine perspektivische Ansicht von unten auf das Schwerlast-Transportfahrzeug 1 gemäß Figur 1 gezeigt. Neben den bereits zu der Figur 1 beschriebenen Elementen ist in der Figur 2 zusätzlich ein Fahrantrieb des Schwerlast-Transportfahrzeuges 1 zu erkennen, der im Wesentlichen aus einem vorderen Elektromotor 9a, einem vorderen Verteilgetriebe 10a, einem hinteren Elektromotor 9b und einem hinteren Verteilgetriebe 10b besteht. Der vordere Elektromotor 9a ist in Längsrichtung L des Schwerlast-Transportfahrzeuges 1 gesehen zentral und im Bereich der Vorderachse 3a unter dem Fahrzeugrahmen 2 befestigt. Der hintere Elektromotor 9b ist in Längsrichtung L des Schwerlast-Transportfahrzeuges 1 gesehen zentral und im Bereich der Hinterachse 3b unter dem Fahrzeugrahmen 2 befestigt. Der vordere Elektromotor 9a treibt über das vordere Verteilgetriebe 10a die beiden vorderen Räder 4a an und der hintere Elektromotor 9b über das hintere Verteilgetriebe 10b die beiden hinteren Räder 4b. Das Schwerlast-Transportfahrzeug 1 hat somit einen Allradantrieb.

Außerdem ist ersichtlich, dass zwischen der Batterie 7 und der Vorderachse 3a Raum für die Aufhängung von Schaltschränken 11 unter dem Fahrzeugrahmen 2 vorhanden ist, um Steuerungskomponenten aufzunehmen.

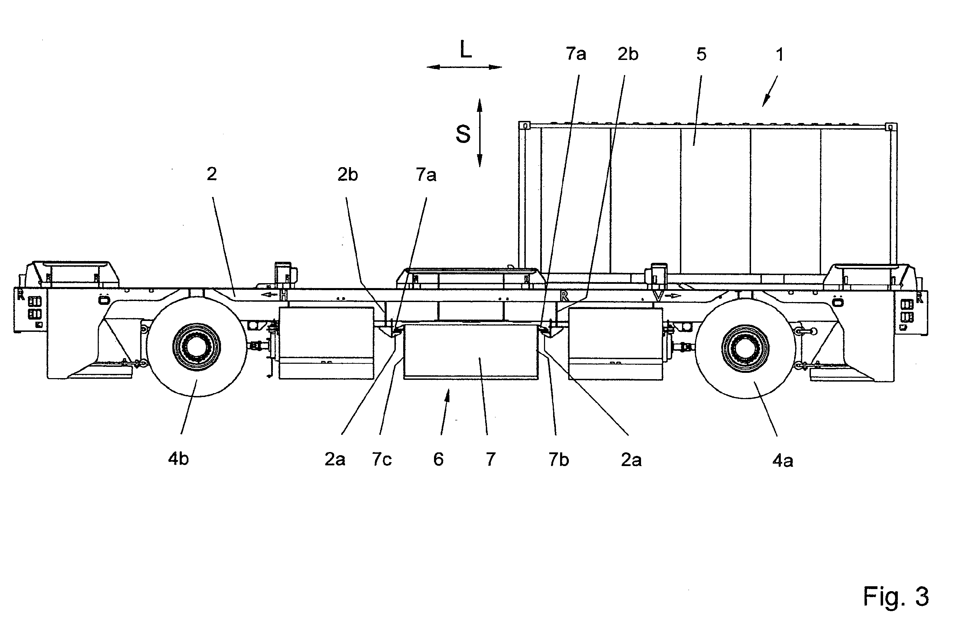

Die Figur 3 zeigt eine Seitenansicht des Schwerlast-Transportfahrzeuges 1. Hieraus ist besonders gut ersichtlich, dass die Batterie 1 über Tragschienen 2a an dem Fahrzeugrahmen 2 des Transportfahrzeuges 2 aufgehängt ist. Die beiden Tragschienen 2a sind mit Abstand zueinander angeordnet, horizontal zueinander ausgerichtet und auf einer Höhe an dem Fahrzeugrahmen 2 über Konsolen 2b befestigt. Die Tragschienen 2a begrenzen den Einbauraum 6 in Längsrichtung L des Fahrzeugs gesehen vorne und hinten. Um die Batterie 7 an den Tragschienen 2a aufhängen zu können, hat die quaderförmige Batterie 1 an ihrer vorderen und hinteren Seitenwänden 7b, 7c und im Bereich der Ecken der Batterie 7 seitlich auskragende Aufhängeelemente 7a, die im Betriebszustand der Batterie 7 auf den Tragschienen 2a des Schwerlast-Transportfahrzeuges 1 aufliegen. Durch diese Art der Aufhängung der Batterie 7 innerhalb des Fahrzeugrahmens 2 und in deren oberen Bereich kann die Batterie 7 einfach von einem Gabelstapler oder anderem Hubgerät leicht unterfahren werden. Dann werden durch eine Bewegung des Gabelstaplers oder des anderen Hubgeräts in einer vertikaler Hub- und Senkrichtung S die Aufhängeelemente 7a von der Tragschiene 2a abgehoben und anschließend kann die Batterie 7 in Ein- und Auslagerungsrichtung E aus dem Transportfahrzeug 1 heraus bewegt werden. Zusätzlich ist vorgesehen, dass durch die vertikale Bewegung in Hub- und Senkrichtung S die Batterie 7, die über nicht dargestellte Zentrierelemente auf den Tragschienen 2a ausgerichtet und gegen Verrutschen gesichert ist, von den Zentrierelementen entriegelt wird und zusätzlich auch vorgesehene elektrische Kontaktelemente an der Batterie 7 und Gegen-Kontaktelemente im Bereich der Tragschienen 2a für eine elektrische Verbindung der Batterie 7 mit dem Fahrantrieb gelöst werden. Der Vorteil hiervon ist, dass das Schwerlast-Transportfahrzeug 1 bezüglich der Entriegelung und Entkontaktierung passiv ausgebildet werden kann.

Als Einsatzgebiete der vorbeschriebenen Schwerlast-Transportfahrzeuge und der zugehörigen Batteriewechselsysteme sind der Umschlag von ISO-Containern im Hafenbereich und im intermodalen Verkehr zwischen Straße und Schiene vorgesehen.

Die vorliegende Erfindung ist an Hand eines flurgebundenen Schwerlast-Transportfahrzeuges für den Transport von ISO-Containern beschrieben worden. Grundsätzlich ist es möglich, auch andere schweren Lasten wie beispielsweise Brammen oder Coils in der Hütten-, Stahl- und Walzwerkstechnik zu transportieren.

### Bezugszeichenliste

- 1: Schwerlast-Transportfahrzeug
- 1a: Seiten
- 2: Fahrzeugrahmen
- 2a: Tragschiene
- 2b: Konsole
- 3a: Vorderachse
- 3b: Hinterachse
- 4a: vordere Räder
- 4b: hintere Räder
- 5: ISO-Container
- 6: Einbauraum
- 7: Batterie
- 7a: Auflageelemente
- 7b: vordere Seitenwand
- 7c: hintere Seitenwand
- 8: Boden
- 9a: vorderer Elektromotor
- 9b: hinterer Elektromotor
- 10a: vorderes Verteilgetriebe
- 10b: hinteres Verteilgetriebe
- 11: Schaltschränke

- E: Be- und Entladerichtung
- L: Längsrichtung
- S: Hub- und Senkrichtung

## Patentansprüche

1. Flurgebundenes Schwerlast-Transportfahrzeug für ISO-Container, insbesondere fahrerloses Schwerlast-Transportfahrzeug (1), mit einem Fahrantrieb, wobei in dem Schwerlast-Transportfahrzeug (1) eine Batterie (7) für eine Energiebereitstellung für den Fahrantrieb angeordnet ist, **dadurch gekennzeichnet, dass** die Batterie (7) für einen Wechsel für ein Aufladen der Batterie (7) außerhalb des Schwerlast-Transportfahrzeuges (1) lösbar mit dem Schwerlast-Transportfahrzeug (1) verbunden ist und in das Schwerlast-Transportfahrzeug (1) quer zur Längsrichtung (L) des Schwerlast-Transportfahrzeuges (1) hinein und aus diesem heraus bewegbar ist, die Batterie (7) als Bleibatterie ausgebildet ist und ein Gewicht zwischen 6 t und 10 t aufweist, das Schwerlast-Transportfahrzeug (1) mindestens ein zulässiges Gesamtgewicht von 40 t aufweist wobei das Schwerlast-Transportfahrzeug (1) einen Fahrzeugrahmen (2) aufweist, der einem nach unten und zu den Seiten (2a) des Schwerlast-Transportfahrzeuges (1) offenen Einbauraum (6) für die Batterie (7) aufweist und in Längsrichtung (L) des Schwerlast-Transportfahrzeuges (1) gesehen vorne und hinten am Rand des Einbauraums (6) Tragschienen (2a) angeordnet sind, die quer zur Längsrichtung (L) des Schwerlast-Transportfahrzeuges (1) verlaufen und auf denen sich die Batterie (7) abstützt.

2. Flurgebundenes Schwerlast-Transportfahrzeug nach Anspruch 1, **dadurch gekennzeichnet, dass** das Schwerlast-Transportfahrzeug (1) mehrere vordere Räder (4a) und hintere Räder (4b) aufweist, die vorderen Räder (4a) von einem ersten Elektromotor (9a) und die hinteren Räder (4b) von einem zweiten Elektromotor (9b) antreibbar sind.

3. Flurgebundenes Schwerlast-Transportfahrzeug nach Anspruch 2, **dadurch gekennzeichnet, dass** die Batterie (7) zwischen den vorderen und hinteren Rädern (4a, 4b) angeordnet ist.

4. Flurgebundenes Schwerlast-Transportfahrzeug nach Anspruch 1, **dadurch gekennzeichnet, dass** die Batterie (1) im Wesentlichen quaderförmig ist, an in Längsrichtung (L) des Schwerlast-Transportfahrzeuges (1) gesehen vorderen und hinteren Seitenwänden (7b, 7c) der Batterie (7) Auflageelemente (7a) angeordnet sind, die jeweils aus der vorderen und hinteren Seitenwand (7b, 7c) heraus ragen und über die Auflageelemente (7a) die Batterie (7) auf den Tragschienen (2a) aufliegt.

5. Flurgebundenes Schwerlast-Transportfahrzeug nach Anspruch 5, **dadurch gekennzeichnet, dass** im Bereich der Auflageelemente (7a) und der Tragschienen (2a) Zentrierungselemente angeordnet sind, die bei einem Hereinbewegen der Batterie (7) in den Einbauraum (6) und einem Absenken der Batterie (7) auf die Tragschienen (2a) die Auflageelemente (7a) zu den Tragschienen (2a) ausrichten.

6. Flurgebundenes Schwerlast-Transportfahrzeug nach Anspruch 5 oder 6, **dadurch gekennzeichnet, dass** an der Batterie (7) elektrische Kontaktelemente angeordnet sind und im Bereich der Tragschienen (2a) elektrische Gegen-Kontaktelemente angeordnet sind, die automatisch über ein Absenken der Batterie (7) auf die Tragschienen (2a) verbindbar sind.

## Claims

1. Heavy-duty ground transportation vehicle for ISO containers, and in particular an unmanned heavy-duty transportation vehicle (1), having a travel drive, a battery (7) for supplying energy to the travel drive being arranged in the heavy-duty transportation vehicle (1), **characterised in that** the battery (7) is detachably connected to the heavy-duty transportation vehicle (1) to allow the battery (7) to be changed for charging thereof off the heavy-duty transportation vehicle (1) and can be moved into the heavy-duty transportation vehicle (1) and out thereof transversely to the longitudinal direction (L) of the heavy-duty transportation vehicle (1), the battery (7) takes the form of a lead-acid battery and weighs between 6 t and 10 t, and the permitted all-up weight of the heavy-duty transportation vehicle (1) is at least 40 t, the heavy-duty transportation vehicle (1) having a chassis (2) which has an installation space (6) for the battery (7) which is open downwards and towards the sides (2a) of the heavy-duty transportation vehicle (1) and, looking in the longitudinal direction (L) of the heavy-duty transportation vehicle (1), there being arranged at the front and rear edges of the installation space (6) supporting rails (2a) which extend transversely to the longitudinal direction (L) of the heavy-duty transportation vehicle (1) and on which the battery (7) is supported.

2. Heavy-duty ground transportation vehicle according to claim 1, **characterised in that** the heavy-duty transportation vehicle (1) has a plurality of front wheels (4a) and rear wheels (4b) and the front wheels (4a) can be driven by a first electric motor (9a) and the rear wheels (4b) by a second electric motor (9b).

3. Heavy-duty ground transportation vehicle according to claim 2, **characterised in that** the battery (7) is arranged between the front and rear wheels (4a, 4b).

4. Heavy-duty ground transportation vehicle according to claim 1, **characterised in that** the battery (1) is substantially cuboid and there are arranged, on what are, looking in the longitudinal direction (L) of the heavy-duty transportation vehicle (1), front and rear side-walls (7b, 7c) of the battery (7), supported members (7a) which project from the front and rear side-walls (7b, 7c) respectively, and the battery (7) rests on the supporting rails (2a) via the supported members (7a).

5. Heavy-duty ground transportation vehicle according to claim 4, **characterised in that** there are arranged, in the region of the supported members (7a) and supporting rails (2a), locating members which align the supported members (7a) relative to the supporting rails (2a) when the battery (7) is moved into the installation space (6) and when the battery (7) is lowered onto the supporting rails (2a).

6. Heavy-duty ground transportation vehicle according claim 4 or 5, **characterised in that** electrical contact members are arranged on the battery (7) and there are arranged, in the region of the supporting rails (2a), mating electrical contact members which can be connected automatically by lowering the battery (7) onto the supporting rails (2a).

## Revendications

1. Véhicule de transport de charges lourdes lié au sol pour conteneurs ISO, notamment véhicule de transport de charges lourdes sans chauffeur (1), ledit véhicule comportant un système d'entraînement, une batterie (7) destinée à fournir de l'énergie au système d'entraînement étant agencée dans le véhicule de transport de charges lourdes (1), **caractérisé en ce que** la batterie (7) est reliée de façon amovible au véhicule de transport de charges lourdes (1), à l'extérieur du véhicule de transport de charges lourdes (1), en vue de remplacer ou de charger la batterie (7) et **en ce qu'**elle peut être mise en place dans le véhicule de transport de chargés lourdes (1), et retirée de celui-ci, transversalement à la direction longitudinale (L) du véhicule de transport de charges lourdes (1), **en ce que** la batterie (7) est conformée en batterie au plomb et a un poids compris entre 6 tonnes et 10 tonnes, **en ce que** le véhicule de transport de charges lourdes (1) a au moins un poids total autorisé de 40 tonnes, le véhicule de transport de charges lourdes (1) comportant un châssis de véhicule (2) qui comporte un logement qui est destiné à la batterie (7) et qui est ouvert vers le bas et vers les côtés (2a) du véhicule de transport de charges lourdes (1), et **en ce que** des glissières de support (2a) sont agencées au niveau du bord du logement (6) en avant et en arrière lorsque l'on regarde dans la direction longitudinale (L) du véhicule de transport de charges lourdes ((1), lesquelles glissières de support s'étendent transversalement à la direction longitudinale (L) du véhicule de transport de charges lourdes (1) et glissières sur lesquelles la batterie (7) s'appuie.

2. Véhicule de transport de charges lourdes lié au sol selon la revendication 1, **caractérisé en ce que** le véhicule de transport de charges lourdes (1) comporte plusieurs roues avant (4a) et plusieurs roues arrière (4b), les roues avant (4a) peuvent être entraînées par un premier moteur électrique (9a) et les roues arrière (4b) peuvent être entraînées par un deuxième moteur électrique (9b).

3. Véhicule de transport de charges lourdes lié au sol selon la revendication 2, **caractérisé en ce que** la batterie (7) est agencée entre les roues avant et arrière (4a, 4b).

4. Véhicule de transport de charges lourdes lié au sol selon la revendication 1, **caractérisé en ce que** la batterie (1) a une forme sensiblement quadrangulaire, des éléments d'appui (7a) sont agencés au niveau de parois latérales avant et arrière (7b, 7c) de la batterie, lorsque l'on regarde dans la direction longitudinale (L) du véhicule de transport de charges lourdes (1), lesquels éléments d'appui font saillie des parois latérales avant et arrière (7b, 7c), et la batterie (7) porte sur les glissières de support (2a) par le biais des éléments d'appui (7a).

5. Véhicule de transport de charges lourdes lié au sol selon la revendication 4, **caractérisé en ce que** dans la région des éléments d'appui (7a) et des glissières de support (2a) sont agencés des éléments de centrage qui orientent les éléments d'appui (7a) par rapport aux glissières de support (2a) lorsque la batterie (7) est insérée dans le logement (6) et que la batterie (7) est abaissée sur les glissières de support (2a).

6. Véhicule de transport de charges lourdes lié au sol selon la revendication 4 ou 5, **caractérisé en ce que** des éléments de contact électriques sont agencés au niveau de la batterie (7) et des éléments de contact électriques conjugués sont agencés dans la région des glissières de support (2a), lesquels éléments de contact électriques homologues peuvent être reliés automatiquement lorsque l'on abaisse la batterie sur les glissières de support (2a).
